# EUROPEAN PATENT SPECIFICATION

(11) **EP 1 861 643 B1**
(45) Date of publication and mention of the grant of the patent: **19.08.2009**
(21) Application number: 06726505.8
(22) Date of filing: 23.03.2006
(51) Int. Cl.: F16K 3/22

(54) **VALVE SEAT**
VENTILSITZ
SIÈGE DE ROBINET

(30) Priority: 24.03.2005 GB 0506126
(43) Date of publication of application: 05.12.2007
(73) Proprietor: Parker Hannifin PLC, Devon, EX31 1NP (GB)
(72) Inventor: DAVIS, Mathew, William Parker Hannifin Plc, Barnstaple Devon EX31 1NP (GB)
(74) Representative: Albutt, Anthony John
(86) International application number: PCT/GB2006/001092
(87) International publication number: WO 2006/100507

(56) References cited:
- FR-A- 1 096 685
- US-A- 3 761 052
- US-A1- 2003 010 953

## Description

The present invention relates to a rising plug valve and in particular to a seat for a rising plug valve.

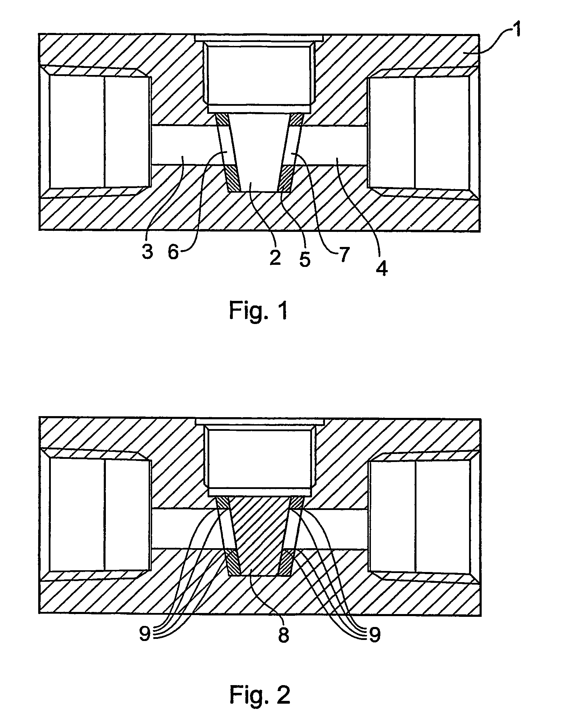

An example of a typical rising plug valve is shown in Figure 1. As can be seen, the valve comprises a body 1, usually made from metal, with a receiving hole 2 therein having a generally frusto-conical shape. A passage is provided through the receiving hole 2, the passage comprising an inlet 3 and an outlet 4. In use a generally frusto-conically shaped tip which is also made from metal is inserted into the receiving hole 2 to block the passageway 3, 4. However, since only a relatively poor seal can be obtained between two engaged metal surfaces, a frusto-conically shaped seat 5 with ports 6, 7 corresponding to the positions of the inlet 2 and outlet 3, made from a softer material is inserted into the receiving hole 2. This enhances the seal between the inlet 3 and outlet 4 provided by the frusto-conically shaped tip. As shown in Figure 2, when a generally frusto-conically shaped mating tip 8 is inserted into the receiving hole 2 with a seat 5 provided therein, the passageway 3, 4 is blocked. However, the seat 5 is rarely a perfect fit inside the receiving hole 2 and the tip 8 is rarely a perfect fit inside seat 5 because of manufacturing tolerances and so to achieve an adequate seal to prevent fluid from passing from the inlet 3 to the outlet 4, the mating tip 8 has to be forced into the seat 5 to distorted at the points 9 at which its ports 6, 7 engage the inlet 2 and outlet 3 and the mating tip 8.

However, in order to achieve a satisfactory seal at points 9, a considerable amount of force has to applied to the mating tip 8 which may be difficult to achieve. In order to achieve this the valve generally has a large handle or operation of the mating tip and the body 1 is bulky in order to provide the strength to accommodate the forces applied to it via the seat 5. Furthermore, the repeated application of high pressure levels to the seat 5 from the mating tip 8 damages the seat 5 giving it a relatively short life of typically only a few hundred uses. Regular replacement is a time consuming and expensive exercise usually requiring shutting down the supply of fluid through the rising plug valve.

US 3761052 relates to a valve having a conically shaped valve chamber and a seat insert removably positioned in the chamber.

According to a first aspect of the present invention there is provided a rising plug valve seat for insertion into a frusto-conical receiving hole of a rising plug valve body, the rising plug valve seat comprising:
a substantially frusto-conical side wall with two ports therein, one port being arranged to be aligned with an inlet of a fiusto-conical receiving hole in a valve body and the other port being arranged to be aligned with an outlet of a frusto-conical receiving hole in a valve body;
wherein at least one of the portions of the side wall between the two ports are, in use, more flexible than the portions of the side wall containing the ports.

The flexibility of at least one of, but preferably both of the portions of the side wall between the ports enables the seat to seal to a receiving hole in the valve body and a mating tip to be inserted into the seat more easily as less force is required to distort the shape of the seat.

The thickness of at least one, but preferably both of the portions of the side wall between the two ports may be less than the thickness of the side wall containing the ports to provide this flexibility.

The portions of the side wall between the two ports may have, in use, a reduced contact area with a receiving hole of a rising plug valve body, for example by the provision of a cut out, recess or flat portion in the portions of the side wall between the ports. One or more orifices, such as one or more slots, may be provided in one, or preferably both of the portions of the side wall between the ports.

According to a second aspect of the present invention there is provided a rising plug valve body with a frusto-conical receiving hole therein having an inlet and an outlet and a rising plug valve seat according to the first aspect of the present invention to be provided in the receiving hole.

Embodiments of the present invention will now be described, by way of example only, with reference to the accompanying drawings in which:
Figure 1 shows a cross-sectional view of a conventional rising plug valve;
Figure 2 shows the conventional rising plug valve of Figure 1 with a mating tip inserted therein;
Figure 3 shows a first example of a seat for a rising plug valve illustrating the present invention;
Figure 4 shows a second example of a seat for a rising plug valve illustrating the present invention and;
Figure 5 shows a rising plug valve including a seat as shown in Figure 5.

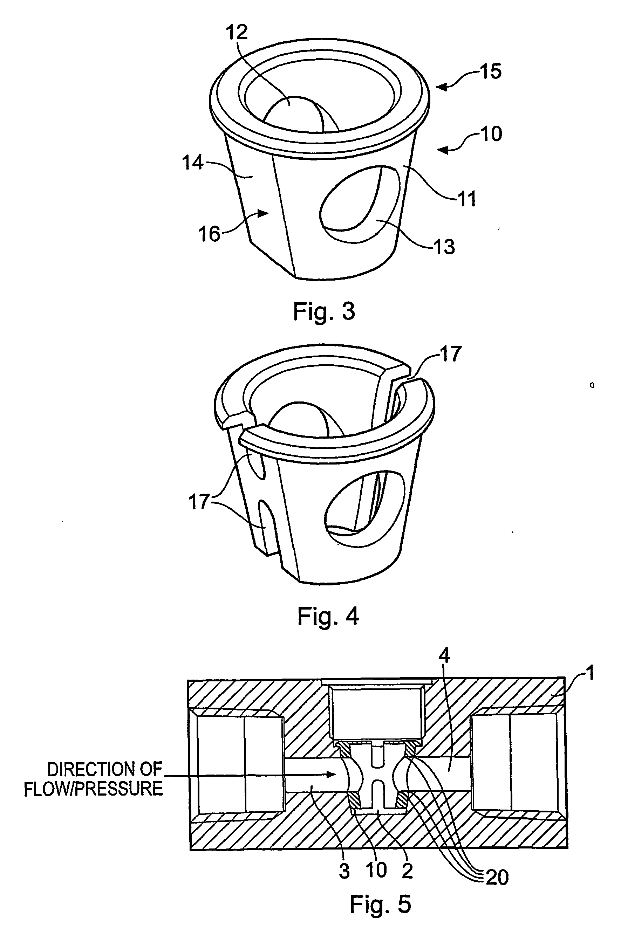

As shown in Figure 3, a rising plug valve seat 10 illustrating the present invention has a generally frusto-conical side wall 11 with two ports 12, 13 therein, one port 12 arranged to be aligned with an inlet of a receiving hole in a valve body and the other port 13 arranged to aligned with an outlet of a receiving hole in the valve body. At least one, and preferably both of the portions 14, 15 of the side wall 11 between the two ports 12, 13 are more flexible than the portion of the side wall 11 containing the ports 12, 13. In the example shown in Figure 3, this flexibility is provided by reducing the contact and sealing area and so the frictional binding of the portions 14, 15 of the side wall 11 between the two ports 12, 13 to the inside surface of a receiving hole in a valve body. In the example of Figure 3, the outside surfaces of the portions 14, 15 of the side wall 11 between the two ports 12, 13 are provided with cut-outs, recesses or flat portions 16 which reduce the thickness of the side wall 11 at these portions, increasing flexibility and enable the outside surfaces of these portions 14, 15 of the side wall not to contact the inside surface of a receiving hole in a valve body, in use, reducing friction. The increased flexibility and reduced contact and sealing area and so friction provided by the portions 14, 15 of the side wall 11 reduces the high levels of closing torque required to enable a mating tip to form a seal across the seat 10 when in a valve body.

Figure 4 shows the seat 10 of Figure 3 with a plurality of orifices in the form of slots 17 provided in the portions 14, 15 of the side wall 11 between the two ports 12, 13. In the example shown in Figure 4 a slot 17 is provided at each of the upper and lower ends of the portions 14, 15 of the side wall 11 between the two ports 12, 13. However, any number of one or more orifices or slots 17 may be provided in each of the portions 14, 15 of the side wall 11 between the two ports 12, 13 and the orifices or slots 17 may be in any suitable position. For example, a single slot 17 may be in substantially the centre of each of the portions 14, 15 of the side wall 11 between the two ports 12, 13.

The orifices or slots 17 give the seat 10 an enhanced level of flexibility, which results in the seat being easier to seal as the forces required to distort the shape of the seat are considerably reduced.

Due to the fact that the seat 10 no longer needs such a high level of distortion and that the distortion does not need to be symmetrical, the seat 10 now only generates a seal on one side of a receiving hole of a valve body in which it is in use, provided i.e. the opposite side to that of the applied pressure. This is shown in Figure 5 with the seal points 20 shown. As can be seen, this new rising plug valve has half the number of seal points of the previous rising plug valve and half the potential leak paths. In the example shown in Figure 5 with the seat 10 provided in a receiving hole 2 of a valve body 1 a mating tip 8 would have the ability to move or "float" in the direction of the applied pressure so that the tip and its supporting spindle are not subject to undesirable forces. This feature ensures that minimal force is exerted onto the spindle and therefore all of the closing force is exerted onto the sealing member.

The seat 10 may be made of any suitable material.

Tests with a seat 10 according to the present invention in a rising plug valve have produced excellent seals for over 2000 cycles with no loss of seal, whereas a conventional rising plug valve seat has a typical life span of a few hundred seals before the seal is compromise.

Rising plug valves with seats 10 according to the present invention require reduced operating and closing torque to engage a mating tip to produce a seal and result in a more compact rising plug valve with a reduction in unit cost. The seat 10 requires reduced forces during use extending the life of the seat and reducing down time for the system in which it is provided.

Many variations may be made to the example described above whilst still falling within the scope of the invention. For example, a seat may be provided with one or more orifices such as slots in the portions of the side wall between the ports 12, 13, but without the cut-out or flat portions 16. The orifices or slots would provide sufficient flexibility for the seat to operate providing the advantages of the invention.

## Claims

1. A rising plug valve seat (10) for insertion into a frusto-conical receiving hole of a rising plug valve body, the rising plug valve seat comprising:
a substantially frusto-conical side wall (11) with two ports (12,13) therein, one port (12) being arranged to be aligned with an inlet of a frusto-conical receiving hole in a valve body and the other port (13) being arranged to be aligned with an outlet of the frusto-conical receiving hole in a valve body
wherein at least one of the portions of the side wall between the two ports are, in use, more flexible than the portions of the side wall containing the ports (12,13).

2. A rising plug valve seat according to claim 1, wherein the thickness of at least one of the portions of the side wall between the two ports is less than the thickness of the side wall containing the ports.

3. A rising plug valve seat according to claim 1 or claim 2, wherein at least one of the portions of the side wall between the two ports has, in use, a reduced contact area with the inside surface of a receiving hole of a rising plug valve body.

4. A rising plug valve seat according to claim 3, wherein at least one of the portions of the side wall between the two ports has a cut-out, recess, or flat portion.

5. A rising plug valve seat according to any one of the preceding claims, wherein at least one of the portions of the side wall between the two ports has at least one orifice therein.

6. A rising plug valve seat according to claim 5, wherein the orifice is a slot.

7. A rising plug valve seat according to claim 6, wherein two slots are provided in each portion of the side wall between the two ports.

8. A rising plug valve comprising a rising plug valve body with a frusto-conical receiving hole therein having an inlet and an outlet and a rising plug valve seat according to any one of the preceding claims to be provided in the receiving hole.

9. A rising plug valve according to claim 8, including a mating tip to be received in the rising plug valve seat.

10. A rising plug valve according to claim 9, wherein the mating tip is provided on a spindle and is movable in a direction from the inlet port to the outlet port such that, in use, a seal is only provided at the outlet port to ensure that excessive force is not exerted on the spindle and the closing force is applied on the valve seat.

## Patentansprüche

1. Ventilsitz (10) für ein steigendes Kegelventil für das Einsetzen in ein kegelstumpfförmiges Aufnahmeloch eines Körpers bzw. Hauptteils eines steigenden Kegelventils, wobei der Ventilsitz für ein steigendes Kegelventil aufweist:
eine im wesentlichen kegelstumpfförmige Seitenwand (11) mit zwei darin ausgebildeten Anschlüssen (12, 13), wobei ein Anschluß (12) so angeordnet ist, daß er mit einem Einlaß eines kegelstumpfförmigen Aufnahmeloches in einem Ventilkörper ausgerichtet ist, und der andere Anschluβ (13) so angeordnet ist, daß er mit einem Auslaß des kegelstumpfförmigen Aufnahmeloches in einem Ventilkörper ausgerichtet ist,
wobei wenigstens einer der Abschnitte der Seitenwand zwischen den beiden Anschlüssen im Gebrauch flexibler ist als die Abschnitte der Seitenwand, weiche die Anschlüsse (12, 13) enthalten.

2. Ventilsitz für ein steigendes Kegelventil nach Anspruch 1, wobei die Dicke wenigstens eines der Abschnitte der Seitenwand zwischen den beiden Anschlüssen geringer ist als die Dicke derSeitenwand, weich die Anschlüsse enthält.

3. Ventilsitz für ein steigendes Kegelventil nach Anspruch 1 oder Anspruch 2, wobei wenigstens einer der Abschnitte der Seitenwand zwischen den beiden Anschlüssen im Gebrauch einen reduzierten Kontaktbereich mit der inneren Oberfläche eines Aufnahmeloches eines Ventilkörpers eines steigenden Kegelventils hat.

4. Ventilsitz für ein steigendes Kegelventil nach Anspruch 3, wobei wenigstens einer der Abschnitte der Seitenwand zwischen den beiden Anschlüssen einen ausgeschnittenen, ausgesparten oder flächen Abschnitt aufweist.

5. Ventilsitz für ein steigendes Kegelventil nach einem der vorangegangenen Ansprüche, wobei wenigstens einer der Abschnitte der Seitenwand zwischen den beiden Anschlüssen wenigstens eine öffnung darin aufweist.

6. Ventilsitz für ein steigendes Kegelventil nach Anspruch 5, wobei die Öffnung ein Schlitz ist.

7. Ventilsitz für ein steigendes Kegelventil nach Anspruch 6, wobei zwei Schlitze in jedem Abschnitt der Seitenwand zwischen den beiden Anschlüssen vorgesehen sind.

8. Steigendes Kegelventil, weiches einen Ventilsitz für ein steigendes Kegelventil mit einem kegeistumpfförritigen Aufnahmeloch darin mit einem Einlaß und einem Auslaß und einen Ventilsitz für ein steigendes Kegelventil nach einem der vorangegangenen Ansprüche für eine Anordnung in dem Aufnahmeloch aufweist.

9. Steigendes Kegelventil nach Anspruch 8, weiches einen passenden Kopf für die Aufnahme in dem Ventilsitz für ein steigendes Kegelventil aufweist.

10. Steigendes Kegelventil nach Anspruch 9, wobei der passende Kopf auf einer Spindel vorgesehen und in einer Richtung von dem Einlaßanschluß zu dem Auslaßanschluß bewegbar ist, so daß im Gebrauch eine Dichtung nur am Auslaßanschluß vorgesehen ist, um sicherzustellen, daß keine übermäßige Kraft auf die Spindel einwirkt und die Schließkraft auf den Ventilsitz aufgebracht wird.

## Revendications

1. Siège de robinet à tampon montant (10) destiné à être inséré dans un trou de réception tronconique d'un corps de robinet à tournant montant, le siège de robinet à tournant montant comprenant :
une paroi latérale sensiblement tronconique (11) avec deux orifices (12, 13) dans celle-ci, un orifice (12) étant agencé pour être aligné avec une entrée d'un trou de réception tronconique dans un corps de robinet et l'autre orifice (13) étant agencé pour être aligné avec une sortie du trou de réception tronconique dans un corps de robinet,
dans lequel au moins une des parties de la paroi latérale entre les deux orifices est, durant l'utilisation, plus flexible que les parties de la paroi latérale contenant les orifices (12, 13).

2. Siège de robinet à tampon montant selon la revendication 1, dans lequel l'épaisseur d'au moins une des parties de la paroi latérale entre les deux orifices est inférieure à l'épaisseur de la paroi latérale contenant les orifices.

3. Siège de robinet à tampon montant selon la revendication 1 ou la revendication 2, dans lequel au moins une des parties de la paroi latérale entre les deux orifices possède, durant l'utilisation, une superficie de contact réduite avec la surface intérieure d'un trou de réception d'un corps de robinet à tampon montant.

4. Siège de robinet à tampon montant selon la revendication 3, dans lequel au moins une des parties de la paroi latérale entre les deux orifices possède une découpe, un évidement ou une partie plate.

5. Siège de robinet à tampon montant selon l'une quelconque des revendications précédentes, dans lequel au moins une des parties de la paroi latérale entre les deux orifices possède au moins une ouverture dans celle-ci.

6. Siège de robinet à tampon montant selon la revendication 5, dans lequel l'ouverture est une fente.

7. Siège de robinet à tampon montant selon la revendication 6, dans lequel deux fentes sont prévues dans chaque partie de la paroi latérale entre les deux orifices.

8. Robinet à tampon montant comprenant un corps de robinet à tampon montant avec un trou de réception tronconique dans celui-ci possédant une entrée et une sortie et un siège de robinet à tampon montant selon l'une quelconque des revendications précédentes destiné à être prévu dans le trou de réception.

9. Robinet à tampon montant selon la revendication 8, comprenant un embout d'accouplement destiné à être reçu dans le siège de robinet à tampon montant.

10. robinet à tampon montant selon la revendication 9, dans lequel l'embout d'accouplement est prévu sur une tige et est mobile dans une direction allant de l'orifice d'entrée à l'orifice de sortie de sorte que, durant l'utilisation, un joint d'étanchéité soit prévu seulement sur l'orifice de sortie pour s'assurer qu'aucune force excessive n'est exercée sur la tige et la force de fermeture est appliquée sur le siège de robinet.
